# EUROPEAN PATENT SPECIFICATION

(11) **EP 1 409 159 B1**
(45) Date of publication and mention of the grant of the patent: **17.03.2010**
(21) Application number: 02767837.4
(22) Date of filing: 22.07.2002
(51) Int. Cl.: B07C 3/08, B65G 47/96

(54) **SORTING DEVICE AND METHOD FOR FLAT OBJECTS**
SORTIERVORRICHTUNG UND -VERFAHREN FÜR FLACHE GEGENSTÄNDE
DISPOSITIF ET PROCEDE DE TRIAGE D'OBJETS PLATS

(30) Priority: 20.07.2001 IT TO20010716
(43) Date of publication of application: 21.04.2004
(73) Proprietor: ELSAG DATAMAT S.p.A., 16154 Genova (IT)
(72) Inventor: SCARNERA, Michele, I-16151 Genova (IT)
(74) Representative: Jorio, Paolo
(86) International application number: PCT/IT2002/000485
(87) International publication number: WO 2003/008113

(56) References cited:
- US-A- 2 416 398
- US-A- 2 689 657
- US-A- 2 872 057

## Description

### TECHNICAL FIELD

The present invention relates to a device and method for loading, conveying, and sorting substantially flat items (FLATS), in particular mail items.

### BACKGROUND ART

Devices for loading, conveying, and sorting substantially flat items, in particular mail items, are known in which a number of loading units travel along an endless path to convey the items between one or more loading areas, where the items are fed singly into the loading units, and one or more unloading areas, where the items in the loading units are released selectively to conveying containers and/or systems.

Such devices are known from the documents US-A-2 416 398 and US-A-2 689 657.

The term "substantially flat items" is intended to mean any items (e.g. letters, postcards, enclosed documents, boxes, magazines and newspapers with or without a protective cover) having two dimensions which are predominant with respect to the third.

Known loading units normally comprise a casing defining an inner cavity which communicates with the outside of the loading unit through an inlet opening through which the substantially flat item is inserted.

Known sorting devices provide at best for a throughput of roughly 40,000 items/hour, which cannot be increased further without necessarily increasing the linear traveling speed of the loading units along the path. Increasing speed, however, increases the likelihood of the end edges of the substantially flat items, as they are inserted through the inlet opening, striking the parts of the loading unit defining the inlet opening, in which case, the item normally bounces off or crumples, or at any rate is not deposited inside the loading unit.

### DISCLOSURE OF INVENTION

It is an object of the present invention to provide a device for loading, conveying, and sorting substantially flat items, in particular mail items, designed to eliminate the drawbacks of known devices, and which provides for high hourly throughput rates.

According to the present invention, there is provided a device for loading, conveying, and sorting substantially flat items (FLATS), in particular mail items, as claimed in Claim 1.

The present invention also relates to a method of loading, conveying, and sorting substantially flat items (FLATS), in particular mail items, as claimed in Claim 18.

### BRIEF DESCRIPTION OF THE DRAWINGS

A preferred, non-limiting embodiment of the invention will be described by way of example with reference to the accompanying drawings, in which:
Figure 1 shows a schematic view in perspective of a device for loading, conveying, and sorting substantially flat items (FLATS), in particular mail items, in accordance with the teachings of the present invention;
Figure 2 shows a larger-scale view of a detail of the Figure 1 device in a first operating position;
Figure 3 shows the Figure 2 detail in a second operating position;
Figure 4 shows a side view of a subassembly of the Figure 1 device;
Figure 5 shows a view in perspective of a variation of the Figure 1 device.

### BEST MODE FOR CARRYING OUT THE INVENTION

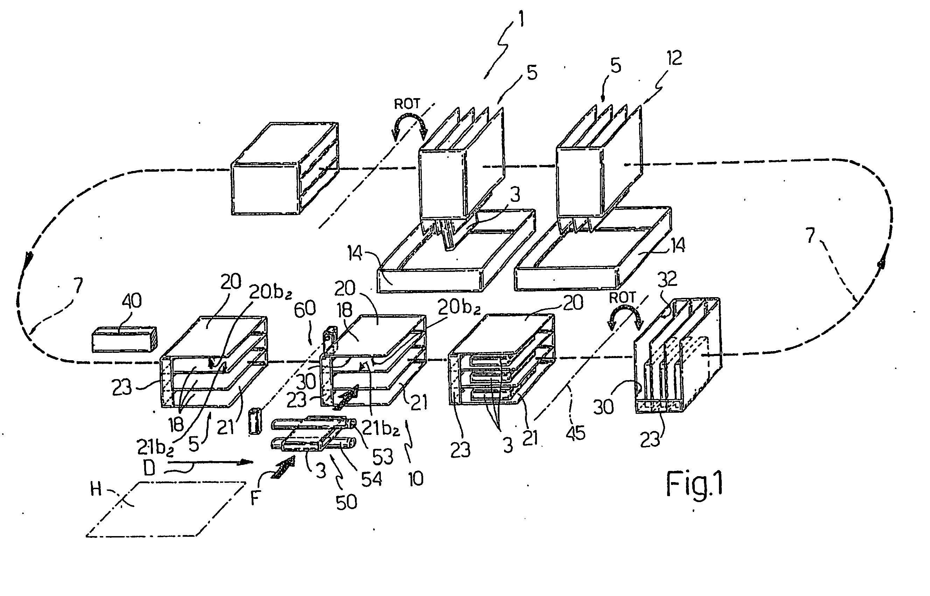

Number 1 in Figure 1 indicates as a whole a device for loading, conveying, and sorting substantially flat items (FLATS), in particular mail items.

The term "substantially flat item (FLAT)" is intended to mean any (e.g. parallelepiped-shaped) item having two dimensions which are predominant with respect to the third.

More specifically, device 1 may be used to advantage for processing substantially flat mail items 3 such as letters, postcards, enclosed documents, boxes, magazines and newspapers with a protective cover, etc..

Device 1 comprises a number of conveying units 5 which are moved by drive means (not shown) along an endless path 7 between at least one loading area 10, where items 3 are fed to units 5, and at least one unloading area 12, where items 3 in conveying units 5 are released into unloading containers 14.

It should be pointed out that the circular endless path 7 shown schematically in Figure 1 and lying in one plane is intended purely as a simplified example, and that path 7 may be of any shape and even extend in a number of planes. Similarly, items 3 may be unloaded into loading units (not shown) forming part of conveying systems (not shown) for receiving and conveying items 3 released by units 5.

Each conveying unit 5 comprises a number of loading units 18 arranged side by side in a stack structure, and each for receiving, housing, and conveying a substantially flat item 3.

More specifically, each loading unit 18 comprises a first rectangular wall 20; and a second rectangular wall 21 parallel to first wall 20 and connected to it by a first rectangular spacer wall 22 extending integrally along the whole length of first major edges 20b₁, 21b₁ of walls 20, 21, and by a second rectangular spacer wall 23 extending integrally along respective portions of second major edges 20b₂, 21b₂, opposite the first edges, of walls 20, 21.

Walls 20, 21, 22, 23 define a parallelepiped-shaped cavity 26 which communicates with the outside through a first rectangular inlet opening 30 defined by the free portions of second edges 20b₂, 21b₂ of walls 20, 21, and by an edge 23b of rectangular spacer wall 23. Wall 23 may even be dispensed with.

Parallelepiped-shaped cavity 26 also communicates with the outside through a second rectangular opening 32 defined by free third edges 20b₃, 21b₃ of walls 20, 21 adjacent and perpendicular to second edges 20b₂, 21b₂, and by an edge 22b of rectangular spacer wall 22.

Rectangular openings 30 and 32 are therefore adjacent and lie in two perpendicular planes.

In any operating condition of device 1, rectangular openings 30 and 32 also connect parallelepiped-shaped cavity 26 to the outside of loading unit 18.

Loading unit 18 also defines a third rectangular unloading opening 33 on the opposite side to opening 32 and having a flat rectangular lid 35 hinged to wall 21.

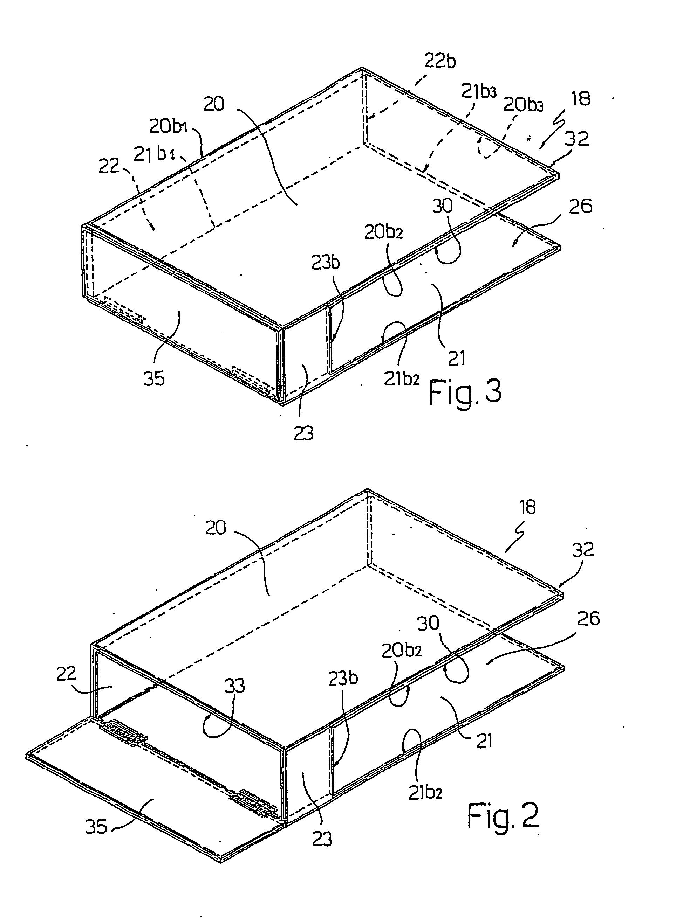

More specifically, lid 35 is movable between a closed position (Figure 3) perpendicular to walls 20, 21, 22, 23 and closing opening 33, and an open position (Figure 2) substantially coplanar with wall 21 and opening opening 33, and in which parallelepiped-shaped cavity 26 also communicates with the outside of loading unit 18 through opening 33.

Lid 35 has a fastening device (not shown) which, in use, secures lid 35 firmly in the closed position.

Alternatively, lid 35 may of course be fitted to opening 32 to open/close opening 32, in which case, opening 33 may be dispensed with and replaced with a wall (not shown) of loading unit 18.

Loading units 18 are arranged one on top of another with walls 20, 21 contacting, and with openings 30, 32 facing corresponding sides of conveying unit 5.

Preferably, though not necessarily, the loading units of each conveying unit may be molded in one piece from plastic material.

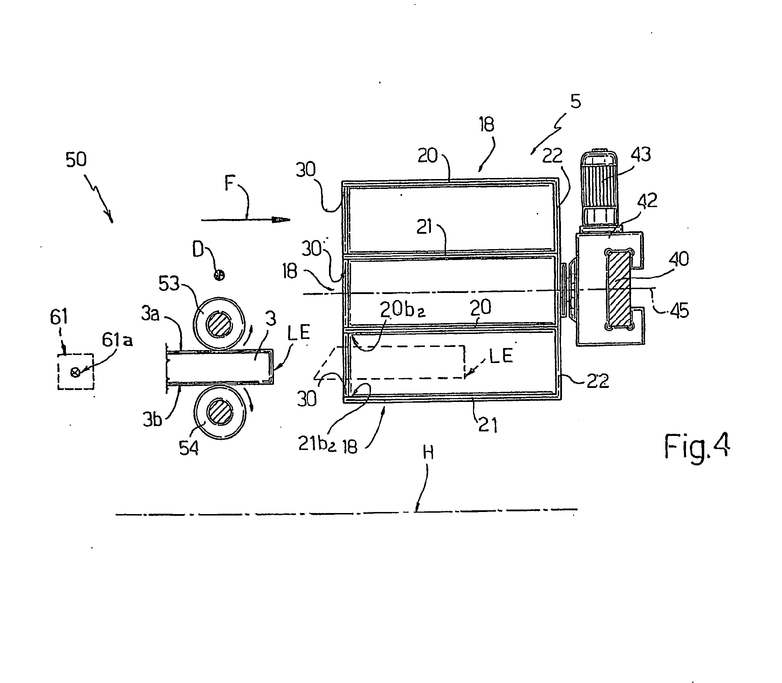

As stated, each conveying unit 5 travels along endless path 7, which may be defined by a rail 40 along which travel powered slides 42 (Figure 4), each supporting loading units 18 of a respective conveying unit 5.

More specifically, each slide 42 may comprise an electric motor 43 for driving slide 42 along rail 40 and so moving conveying unit 5 along endless path 7; or slides 42 may be driven by powered belts or chains (not shown).

A further electric motor (not shown) is also provided for synchronously rotating loading units 18 about an axis 45 parallel to the horizontal.

More specifically, units 18 is rotated between a first loading position, in which rectangular openings 30 are positioned with their major sides (edges 20b₂, 21b₂) parallel to a direction D, and with walls 20, 21 parallel to a plane H - in particular, a direction D parallel to the horizontal and to a plane H also parallel to the horizontal; and a second unloading position, in which rectangular openings 30 are positioned with their major sides crosswise - in particular, perpendicular - to direction D, and with walls 20, 21 crosswise - in particular, perpendicular - to plane H.

Device 1 also comprises one or more FLAT feed devices 50 located at loading area 10 and for receiving substantially flat items 3 at the input, and feeding each item 3 into a respective loading unit 18 at the output. The item is inserted in a direction F crosswise - in particular, perpendicular - to direction D, and traveling on a conveying plane substantially parallel to plane H.

FLAT feed device 50 (shown schematically) may comprise two powered rollers 53, 54 positioned with their axes parallel to direction D, and which frictionally engage opposite flat surfaces 3a, 3b of substantially flat items 3.

Rollers 53, 54 are rotated in opposite directions by drive means (e.g. brushless motors not shown) to impart sufficient acceleration to item 3 to hurl it in direction F towards respective unit 18 and through respective opening 30 into parallelepiped-shaped cavity 26. The acceleration imparted to the item is regulated so that item 3 penetrates opening 30 within the available time "window".

Conveniently, the position of rollers 53, 54 (movable) may be adjusted with respect to the various loading units 18 (fixed) so that rollers 53, 54 feed item 3 through opening 30 of a selected loading unit 18.

Alternatively, the position of loading unit 18 (movable) may be adjusted with respect to rollers 53, 54 (fixed) so that rollers 53, 54 feed item 3 through opening 30 of a selected loading unit 18.

Whichever the case, only one unit 18 of conveying unit 5 is supplied at a time.

Alternatively, a number of rollers 53, 54 (not shown) in different positions (at different heights) may be provided, each for feeding an item 3 through opening 30 of a respective facing unit 18, so as to feed all the loading units 18 of each conveying unit 5 simultaneously.

In actual use, conveying units 5 travel along path 7 to loading area 10. In the example shown, the traveling direction is anticlockwise, though obviously no advantage is lost be employing an opposite (clockwise) traveling direction.

As a unit 18 reaches loading area 10 and nears FLAT feed device 50 (as detected, for example, by a first, e.g. optical, proximity sensor 60), rollers 53, 54 are activated and item 3 is hurled towards rectangular opening 30 positioned with its major sides (edges 20b₂, 21b₂) parallel to direction D.

The position of item 3 is preferably detected by a second proximity sensor 61 (Figure 4 shows an optical path 61a defined by sensor 61 and interrupted by the passage of item 3) located upstream from rollers 53, 54 in direction F and for detecting the passage of a leading edge LE of item 3.

The position of the item determined by sensor 61 detecting leading edge LE, and the position of loading unit 18 detected by sensor 60, therefore give the position of item 3 with respect to loading unit 18; which information can be used to regulate the way in which item 3 is fed by FLAT feed device 50 (e.g. the acceleration imparted by rollers 53, 54).

Along its path, item 3 is fed in direction F crosswise - in particular, perpendicular - to direction D, and along a plane substantially parallel to walls 20, 21, so that a front end portion LE (shown by the dash line in Figure 4) of substantially flat item 3 penetrates opening 30 with leading edges LE of item 3 substantially parallel to the major sides of rectangular opening 30 and therefore to edges 20b₂, 21b₂ of the walls of conveying unit 5 traveling in direction D. Substantially flat item 3 is inserted into loading unit 18 through a wide inlet (measured in direction D) so as to clear the walls (23, 21, 20) defining opening 30, even at a high traveling speed of loading unit 18 in direction D.

Loading units 18 may therefore be fed at high speed (e.g. 1 meter/second) along path 7 to achieve a high throughput (e.g. 60,000 - 80,000 - 100,000 items/hour) in accordance with the size of conveying unit 5.

Substantially flat item 3 is therefore fed into parallelepiped-shaped cavity 26 without leading edges LE contacting the parts of loading unit 18 defining inlet opening 30, and therefore with no significant rebound and no crumpling of the item.

Leading edge LE of item 3, in fact, comes to rest against wall 22, but does not intersect wall 23 which, if contacted, could shift item 3 crosswise to its traveling direction, thus preventing it from being fed into loading unit 18.

Item 3 is then conveyed along path 7 by conveying unit 5 traveling along rail 40.

As conveying unit 5 leaves loading area 10, loading units 18 are moved into the unloading position (indicated ROT in Figure 1), e.g. by means of motor 43 or other devices not shown (e.g. cam devices acting on loading units 18), so that substantially flat items 3 lie in planes substantially perpendicular to plane H (i.e. vertical planes), with leading edges LE resting on lids 35 which, in this position, are closed.

On conveying unit 5 reaching unloading area 12, an unloading device (not shown) selectively releases the fastening devices (not shown) of lids 35, so that items 3 fall by gravity from cavities 26 into different unloading containers 14.

As conveying unit 5 leaves unloading area 12, loading units 18 are moved into the loading position (indicated ROT in Figure 1), e.g. by means of motor 43 or other (e.g. cam) devices not shown, to feed further items 3 into conveying units 5, and lids 35 are again all closed.

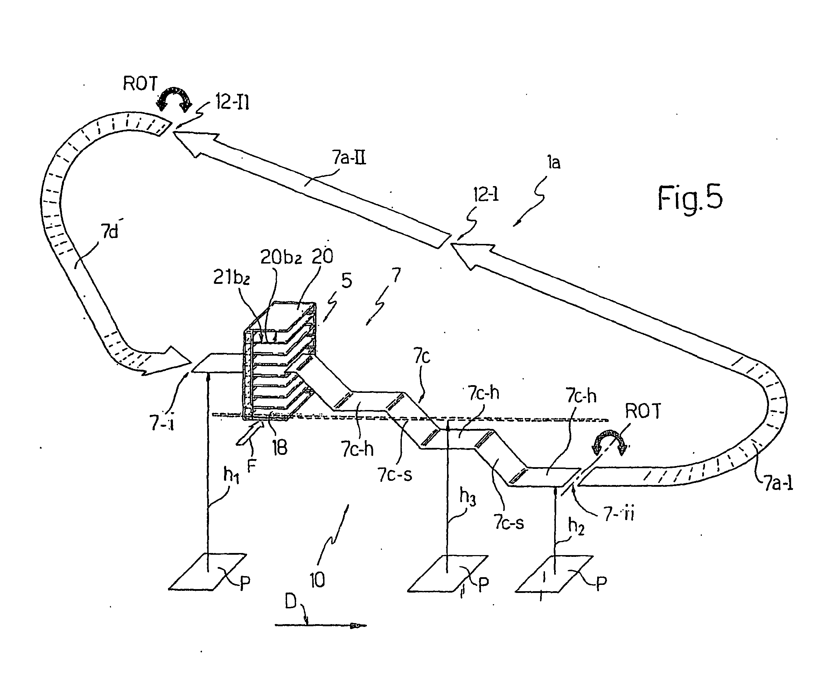

The sorting device 1a shown in Figure 5 comprises an endless path 7 extending in a three-dimensional space, as opposed to one plane.

More specifically, conveying units 5 of device 1a comprise a large number of (e.g. eight) loading units 18 with the same structure as those already described.

Loading area 10 comprises a portion 7c of path 7, which extends between a start point 7-i located at a first height h1 with respect to a reference plane P, and an end point 7-ii located at a second height h2 lower than first height h1. Portion 7c of path 7 therefore slopes downwards, in particular in steps, and comprises a number of horizontal portions 7c-h located at different heights and connected by sloping portions 7c-s.

FLAT feed devices 50 (not shown in Figure 5 for the sake of simplicity) are spaced along portion 7c at the same height h3 with respect to reference plane P.

As conveying units 5 travel along downward-sloping portion 7c, different loading units 18 are positioned facing height h3 at different portions of portion 7c, so that each loading unit 18 is positioned facing, and can be fed with an item 3 by, a respective FLAT feed device 50, thus supplying all the loading units 18 as conveying unit 5 travels along sloping portion 7c.

Sloping portion 7c terminates at a first upward portion 7a-I which terminates at a first unloading area 12-I where first loading units 18 are selectively opened.

More specifically, the items released are fed to a first, e.g. belt, conveying system (not shown) comprising containers (not shown), each for receiving a substantially flat item 3 released by a respective loading unit 18.

Downstream from first unloading area 12-I, first upward portion 7a-I continues in the form of a second upward portion 7a-II which terminates at a second unloading area 12-II where second loading units 18 are selectively opened.

More specifically, the items released are fed to a second, e.g. belt, conveying system (not shown) comprising containers (not shown), each for receiving a substantially flat item 3 released by a respective loading unit 18. Downstream from the second unloading area, second upward portion 7a-II terminates at a downward portion 7d leading back to loading area 10. Along (or upstream from) portion 7d, loading units 18 are rotated so they reach loading area 10 with the major sides of openings 30 aligned with direction D.

Clearly, changes may be made to the device for loading, conveying, and sorting substantially flat items, in particular mail items, as described and illustrated herein without departing from the scope of the appended claims.

## Claims

1. A device for loading, conveying, and sorting substantially flat items (FLATS), in particular mail items (3), comprising at least one loading unit (18) traveling along a path (7) between a loading area (10), where a substantially flat item (3) is fed to the loading unit (18), and an unloading area (12), where the substantially flat item in the loading unit (18) is released; said loading unit (18) defining an inner cavity (26) for receiving and housing said substantially flat item (3); and said inner cavity (26) communicating with the outside of the loading unit (18) through at least one opening (30);
said opening (30) is elongated, and is positioned with its major sides substantially aligned with a first traveling direction (D) of said loading unit when the loading unit is located at said loading area (10); said device also comprising a FLAT feed device (50) for feeding a said substantially flat item (3) in a second direction (F) crosswise in particular, perpendicular - to the first direction (D), so that said substantially flat item (3) is fed into said inner cavity (26) through said elongated opening (30), with leading edges (LE) of said substantially flat item (3) parallel to said major sides of said elongated opening (30),
**characterized in that** rotation means (43) are provided to rotate said loading unit (18) about an axis of rotation (45); said rotation means rotating said loading unit (18) between a first loading position, in which said elongated opening (30) is positioned with its major sides parallel to said first direction (D), and a second unloading position, in which said elongated opening (30) is positioned with its major sides crosswise - in particular, perpendicular - to said first direction (D).

2. A device as claimed in Claim 1, wherein said rotation means (43):
- set said loading unit (18) to said first loading position at said loading area (10);
- set said loading unit (18) to said second unloading position at said unloading area (12) to unload said substantially flat items by force of gravity; and
- restore said loading unit (18) to said first loading position once said substantially flat items (3) are unloaded.

3. A device as claimed in any one of the foregoing Claims, wherein said FLAT feed device (50) comprises at least one pair of powered rollers (53, 54) positioned with their axes parallel to the first direction (D), and which frictionally engage opposite flat surfaces (3a, 3b) of a substantially flat item (3);
said rollers (53, 54) being rotated by drive means in opposite directions to accelerate the substantially flat item (3) retained between the rollers, and to hurl it in said second direction (F) towards the elongated opening of said loading unit (18).

4. A device as claimed in Claim 3, wherein a number of loading units (18) are connected to form a conveying unit (5) traveling along said path (7);
the position of said pair of powered rollers (53, 54) with respect to the various loading units (18) being adjustable.

5. A device as claimed in Claim 4, wherein the position of said pair of powered rollers (53, 54) is fixed, and the position of said conveying unit (5) is adjustable to position a selected loading unit (18) facing said pair of powered rollers (53, 54), and to feed said substantially flat item (3) to said loading unit.

6. A device as claimed in Claim 4, wherein the position of said conveying unit (5) is fixed, and the position of said pair of powered rollers (53, 54) is adjustable to position said pair of powered rollers (53, 54) facing a selected loading unit (18), and to feed said substantially flat item (3) to said loading unit.

7. A device as claimed in Claim 4, wherein a number of pairs of powered rollers are provided, each pair positioned facing a respective loading unit (18) to feed said substantially flat item (3) to the loading unit.

8. A device as claimed in any one of the foregoing Claims, wherein said path is an endless path (7) extending in a three-dimensional space.

9. A device as claimed in Claim 8, wherein at least one conveying unit (5) is provided comprising a number of loading units (18) adjacent to one another in one direction;
said path comprising a sloping portion (7c) extending between a start point (7-i) located at a first height (h1) with respect to a reference plane (P), and an end point (7-ii) located at a second height (h2) lower than the first height (h1);
said device (1) also comprising a number of FLAT feed devices (50) spaced along said sloping portion (7c) and substantially at a third height (h3) with respect to the reference plane (P);
as the conveying unit (5) travels along said sloping portion (7c), different loading units (18) are positioned at the third height (h3), so that each loading unit (18) is positioned facing a respective FLAT feed device (50) to receive from it a substantially flat item (3).

10. A device as claimed in Claim 9, wherein said sloping portion (7c) terminates at a first upward portion (7a-I) which terminates at a first unloading area (12-I) where first loading units (18) are selectively opened to feed the released substantially flat items to a first conveying system; said first upward portion (7a-I) continuing, downstream from said first unloading area (12-I) into a second upward portion (7a-II) which terminates at a second unloading area (12-II) where second loading units (18) are selectively opened to feed the released substantially flat items to a second conveying system;
said second upward portion (7a-II) terminating, downstream from the second unloading area, at a downward portion (7d) leading back to said sloping portion (7c).

11. A device as claimed in Claim 9 or 10, wherein said sloping portion (7c) slopes downwards in steps, and comprises a number of horizontal portions (7c-h) located at different heights and connected by sloping portions (7c-s).

12. A device as claimed in any one of the foregoing Claims, and comprising:
- first sensor means (60) for detecting the approach of said loading unit (18) to said FLAT feed device (50); and
- second sensor means (61) for detecting the position of the substantially flat item 83) fed to said FLAT feed device (50);
said device also determining the position of the incoming substantially flat item (3) with respect to the incoming loading unit (18).

13. A device as claimed in Claim 1, wherein said elongated opening (30) is rectangular.

14. A device as claimed in Claim 1, wherein said loading unit (18) comprises at least a first and a second wall (20, 21) spaced apart and defining opposite sides of said inner cavity (26); at least one portion each of respective facing straight edges (20b₂, 21b₂) of said first and second wall defining the major sides of said elongated opening (30).

15. A device as claimed in any one of the foregoing Claims, wherein said loading unit (18) comprises at least one unloading opening (33) fitted with a lid (35) which is movable between a closed position closing the unloading opening (33), and an open position in which the unloading opening (33) is at least partly accessible; said lid (35) being set, at said unloading area (12), to said open position to enable said substantially flat item (3) to be unloaded from said inner cavity (26) through said unloading opening (33).

16. A device as claimed in any one of the foregoing Claims, wherein a number of loading units (18) are connected to form a conveying unit (5) traveling along said path (7).

17. A device as claimed in Claim 16, wherein said elongated openings (30) of said loading units (18) extend on the same side of said conveying unit (5).

18. A method of loading, conveying, and sorting substantially flat items (FLATS), in particular mail items (3), comprising the steps of:
- feeding a substantially flat item (3) to a loading unit (18) at a loading area (10);
- moving said loading unit to an unloading area (12); and
- selectively releasing the substantially flat item from said loading unit;
said loading unit (18) defining an inner cavity (26) for housing said substantially flat item (3) and which communicates with the outside of the loading unit (18) through at least one elongated opening (30);
said feeding step comprising the steps of:
- positioning said elongated opening with its major sides substantially aligned with a first traveling direction (D) of the loading unit (18); and
- feeding a said substantially flat item (3) in a second direction (F) crosswise - in particular, perpendicular - to the first direction (D), so that the substantially flat item (3) is fed into said inner cavity (26) through said elongated opening, with leading edges (LE) of said substantially flat item (3) substantially parallel to said major sides of said elongated opening (30),
,the method being **characterized by** the steps of:
rotating said loading unit (18) about an axis of rotation (45) and between a first loading position in which said elongated opening (30) is positioned with its major sides parallel to said first traveling direction (D) and a second unloading position, in which said elongated opening (30) is positioned with its major sides crosswise, in particular perpendicular, to said first direction.

## Patentansprüche

1. Vorrichtung zum Laden, Transportieren und Sortieren von im Wesentlichen flachen Elementen (FLATS), insbesondere von postalischen Elementen (3), mit wenigstens einer Ladeeinheit (18), die sich längs eines Weges (7) zwischen einem Ladebereich (10), wo ein im Wesentlichen flaches Element (3) der Ladeeinheit (18) zugeführt wird, und einem Entladebereich (12), wo das im Wesentlichen flache Element in der Ladeeinheit (18) ausgegeben wird, bewegt; wobei die Ladeeinheit (18) einen inneren Hohlraum (26) definiert, um das im Wesentlichen flache Element (3) zu empfangen und aufzunehmen; und wobei der innere Hohlraum (26) mit der äußeren Umgebung der Ladeeinheit (18) durch wenigstens eine Öffnung (30) kommuniziert;
wobei die Öffnung (30) lang gestreckt ist und mit ihren Hauptseiten im Wesentlichen auf die erste Bewegungsrichtung (D) der Ladeeinheit ausgerichtet ist, wenn sich die Ladeeinheit in dem Ladebereich (10) befindet; wobei die Vorrichtung außerdem mit einer FLAT-Zufuhrvorrichtung (50) versehen ist, um das im Wesentliche flache Element (3) in einer zweiten Richtung (F) quer - insbesondere senkrecht - zu der ersten Richtung (D) zuzuführen, so dass das im Wesentliche flache Element (3) dem inneren Hohlraum (26) durch die lang gestreckte Öffnung (30) zugeführt wird, wobei die Vorderkanten (LE) des im Wesentlichen flachen Elements (3) zu den Hauptseiten der lang gestreckten Öffnung (30) parallel sind,
**dadurch gekennzeichnet, dass** Drehmittel (43) vorgesehen sind, um die Ladeeinheit (18) um eine Drehachse (45) zu drehen; wobei die Drehmittel die Ladeeinheit (18) zwischen einer ersten Ladeposition, in der die lang gestreckte Öffnung (30) mit ihren Hautseiten parallel zu der ersten Richtung (D) positioniert ist, und einer zweiten Entladeposition, in der die lang gestreckte Öffnung (30) mit ihren Hauptseiten quer - insbesondere senkrecht - zu der ersten Richtung (D) positioniert ist, drehen.

2. Vorrichtung nach Anspruch 1, wobei die Drehmittel (43):
- die Ladeeinheit (18) in der ersten Ladeposition in dem Ladebereich (10) anordnen;
- die Ladeeinheit (18) in der zweiten Entladeposition in dem Entladebereich (12) anordnen, um die im Wesentlichen flachen Elemente mittels der Schwerkraft zu entladen; und
- die Ladeeinheit (18) wieder in die erste Ladeposition zurückstellen, sobald die im Wesentlichen flachen Elemente (3) entladen worden sind.

3. Vorrichtung nach einem der vorhergehenden Ansprüche, wobei die FLAT-Zufuhrvorrichtung (50) wenigstens ein Paar angetriebener Rollen (53, 54) enthält, die mit ihren Achsen parallel zu der ersten Richtung (D) positioniert sind und die mit gegenüberliegenden ebenen Oberflächen (3a, 3b) eines im Wesentlichen flachen Elements (3) reibschlüssig in Eingriff sind;
wobei die Rollen (53, 54) durch Antriebsmittel in entgegengesetzten Richtungen gedreht werden, um das zwischen den Rollen gehaltene im Wesentlichen flache Element (3) zu beschleunigen, um es in der zweiten Richtung (F) zu der lang gestreckten Öffnung der Ladeeinheit (18) zu schleudern.

4. Vorrichtung nach Anspruch 3, wobei zahlreiche Ladeeinheiten (18) verbunden sind, um eine Transporteinheit (5) zu bilden, die sich längs des Weges (7) bewegt;
wobei die Position des Paars angetriebener Rollen (53, 54) in Bezug auf die verschiedenen Ladeeinheiten (18) einstellbar ist.

5. Vorrichtung nach Anspruch 4, wobei die Position des Paars angetriebener Rollen (53, 54) fest ist und die Position der Transporteinheit (5) einstellbar ist, um eine ausgewählte Ladeeinheit (18), die dem Paar angetriebener Rollen (53, 54) zugewandt ist, zu positionieren und um das im Wesentlichen flache Element (3) der Ladeeinheit zuzuführen.

6. Vorrichtung nach Anspruch 4, wobei die Position der Transporteinheit (5) fest ist und die Position des Paars angetriebener Rollen (53, 54) einstellbar ist, um das Paar angetriebener Rollen (53, 54), die einer ausgewählten Ladeeinheit (18) zugewandt sind, zu positionieren und um das im Wesentlichen flache Element (3) der Ladeeinheit zuzuführen.

7. Vorrichtung nach Anspruch 4, wobei zahlreiche Paare angetriebener Rollen vorgesehen sind, wobei jedes Paar so positioniert ist, dass es einer entsprechenden Ladeeinheit (18) zugewandt ist, um das im Wesentlichen flache Element (3) der Ladeeinheit zuzuführen.

8. Vorrichtung nach einem der vorhergehenden Ansprüche, wobei der Weg ein Endlosweg (7) ist, der sich in einem dreidimensionalen Raum erstreckt.

9. Vorrichtung nach Anspruch 8, wobei wenigstens eine Transporteinheit (5) vorgesehen ist, die zahlreiche Ladeeinheiten (18) enthält, die in einer Richtung zueinander benachbart sind;
wobei der Weg einen abfallenden Abschnitt (7c) aufweist, der sich zwischen einem Startpunkt (7-i), der sich auf einer ersten Höhe (h1) in Bezug auf eine Referenzebene (P) befindet, und einem Endpunkt (7-ii), der sich auf einer zweiten Höhe (h2), die niedriger als die erste Höhe (h1) ist, befindet, erstreckt;
wobei die Vorrichtung (1) außerdem zahlreiche FLAT-Zufuhrvorrichtungen (50) aufweist, die längs des abfallenden Abschnitts (7c) voneinander beabstandet sind und sich im Wesentlichen auf einer dritten Höhe (h3) in Bezug auf die Referenzebene (P) befinden;
wobei dann, wenn sich die Transporteinheit (5) längs des abfallenden Abschnitts (7c) bewegt, unterschiedliche Ladeeinheiten (18) auf der dritten Höhe (h3) positioniert werden, so dass jede Ladeeinheit (18) so positioniert wird, dass sie einer entsprechenden FLAT-Zufuhrvorrichtung (50) zugewandt ist, um von ihr ein im Wesentlichen flaches Element (3) zu empfangen.

10. Vorrichtung nach Anspruch 9, wobei der abfallende Abschnitt (7c) bei einem ersten nach oben gerichteten Abschnitt (7a-I) endet, der an einem ersten Entladebereich (12-I) endet, wo die ersten Ladeeinheiten (18) wahlweise geöffnet werden, um die ausgegebenen im Wesentlichen flachen Elemente einem ersten Transportsystem zuzuführen, wobei der erste nach oben gerichtete Abschnitt (7a-I) stromabseitig von dem ersten Entladebereich (12-I) zu einem zweiten nach oben gerichteten Abschnitt (7a-II) fortgesetzt ist, der in einem zweiten Entladebereich (12-II) endet, wo zweite Ladeeinheiten (18) wahlweise geöffnet werden, um die ausgegebenen im Wesentlichen flachen Elemente einem zweiten Transportsystem zuzuführen;
wobei der zweite nach oben gerichteten Abschnitt (7a-II) stromabseitig von dem zweiten Entladebereich bei einem nach unten gerichteten Abschnitt (7b) endet, der zu dem abfallenden Abschnitt (7c) zurückführt.

11. Vorrichtung nach Anspruch 9 oder 10, wobei der abfallende Abschnitt (7c) stufenartig nach unten abfällt ist und zahlreiche horizontale Abschnitte (7c-h) aufweist, die sich auf verschiedenen Höhen befinden und durch abfallende Abschnitte (7c-s) verbunden sind.

12. Vorrichtung nach einem der vorhergehenden Ansprüche, mit:
- ersten Sensormitteln (60), um die Annäherung der Ladeeinheit (18) an die FLAT-Zufuhrvorrichtung (50) zu detektieren; und
- zweiten Sensormitteln (61), um die Position des im Wesentlichen flachen Elements (83), das der FLAT-Zufuhrvorrichtung (50) zugeführt worden ist, zu detektieren;
wobei die Vorrichtung außerdem die Position des ankommenden im Wesentlichen flachen Elements (3) in Bezug auf die ankommende Ladeeinheit (18) bestimmt.

13. Vorrichtung nach Anspruch 1, wobei die lang gestreckte Öffnung (30) rechtwinklig ist.

14. Vorrichtung nach Anspruch 1, wobei die Ladeeinheit (18) wenigstens eine erste und eine zweite Wand (20, 21) aufweist, die voneinander beabstandet sind und gegenüberliegende Seiten des inneren Hohlraums (26) definieren; wobei wenigstens ein Abschnitt jeder der jeweiligen einander zugewandten geraden Kanten (20b₂, 21b₂) der ersten bzw. der zweiten Wand die Hauptseiten der lang gestreckten Öffnung (30) definieren.

15. Vorrichtung nach einem der vorhergehenden Ansprüche, wobei die Ladeeinheit (18) wenigstens eine Entladeöffnung (33) aufweist, die mit einem Deckel (35) versehen ist, der zwischen einer geschlossenen Stellung, in der die Entladeöffnung (33) verschlossen ist, und einer geöffneten Stellung, in der die Entladeöffnung (33) wenigstens teilweise zugänglich ist, beweglich ist; wobei der Deckel (35) in dem Entladebereich (12) in der geöffneten Stellung angeordnet ist, um zu ermöglichen, dass das im Wesentlichen flache Element (3) aus dem inneren Hohlraum (26) durch die Entladeöffnung (33) entladen wird.

16. Vorrichtung nach einem der vorhergehenden Ansprüche, wobei zahlreiche Ladeeinheiten (18) verbunden sind, um eine Transporteinheit (5) zu bilden, die sich längs des Weges (7) bewegt.

17. Vorrichtung nach Anspruch 16, wobei sich die lang gestreckten Öffnungen (30) der Ladeeinheiten (18) auf derselben Seite der Transporteinheit (5) erstrecken.

18. Verfahren zum Laden, Transportieren und Sortieren von im Wesentlichen flachen Elementen (FLATS), insbesondere von postalischen Elementen (3), das die folgenden Schritte enthält:
- Zuführen eines im Wesentlichen flachen Elements (3) zu einer Ladeeinheit (18) in einem Ladebereich (10);
- Bewegen der Ladeeinheit zu einem Entladebereich (12); und
- wahlweises Ausgeben des im Wesentlichen flachen Elements von der Ladeeinheit;
wobei die Ladeeinheit (18) einen inneren Hohlraum (26) definiert, um das im Wesentlichen flache Element (3) aufzunehmen, der mit der äußeren Umgebung der Ladeeinheit (18) durch wenigstens eine lang gestreckte Öffnung (30) kommuniziert;
wobei der Zufuhrschritt die folgenden Schritte enthält:
- Positionieren der lang gestreckten Öffnung mit ihren Hauptseiten im Wesentlichen ausgerichtet auf eine erste Bewegungsrichtung (D) der Ladeeinheit (18); und
- Zuführen eines im Wesentlichen flachen Elements (3) in einer zweiten Richtung (F) quer - insbesondere senkrecht - zu der ersten Richtung (D), so dass das im Wesentlichen flache Element (3) dem inneren Hohlraum (26) durch die lang gestreckte Öffnung zugeführt wird, wobei die Vorderkanten (LE) des im Wesentlichen flachen Elements (3) zu den Hauptseiten der lang gestreckten Öffnung (30) im Wesentlichen parallel sind,
wobei das Verfahren **gekennzeichnet ist durch** die folgenden Schritte:
Drehen der Ladeeinheit (18) um eine Drehachse (45) und zwischen einer ersten Ladeposition, in der die lang gestreckte Öffnung (30) mit ihren Hauptseiten parallel zu der ersten Bewegungsrichtung (D) positioniert ist, und einer zweiten Entladeposition, in der die lang gestreckte Öffnung (30) mit ihrem Hauptseiten quer, insbesondere senkrecht, zu der ersten Richtung positioniert ist.

## Revendications

1. Dispositif pour charger, transporter et trier des articles sensiblement plats (FLAT), en particulier des articles de courrier (3), comprenant au moins une unité de chargement (18) se déplaçant le long d'un chemin (7) entre une zone de chargement (10), où un article sensiblement plat (3) est transféré vers l'unité de chargement (18), et une zone de déchargement (12), où l'article sensiblement plat dans l'unité de chargement (18) est libéré ; ladite unité de chargement (18) définissant une cavité intérieure (26) pour recevoir et loger ledit article sensiblement plat (3) ; et ladite cavité intérieure (26) communiquant avec l'extérieur de l'unité de chargement (18) par au moins une ouverture (30) ;
ladite ouverture (30) est allongée, et est positionnée avec ses côtés principaux sensiblement alignés avec une première direction de déplacement (D) de ladite unité de chargement lorsque l'unité de chargement est située dans ladite zone de chargement (10) ; ledit dispositif comprenant également un dispositif d'approvisionnement en FLAT (50) pour transférer un dit article sensiblement plat (3) dans une seconde direction (F) transversale - en particulier, perpendiculaire - à la première direction (D), de sorte que ledit article sensiblement plat (3) est transféré dans ladite cavité intérieure (26) à travers ladite ouverture allongée (30), des bords avant (LE) dudit article sensiblement plat (3) étant parallèles auxdits côtés principaux de ladite ouverture allongée (30),
**caractérisé en ce que** des moyens de rotation (43) sont fournis pour faire tourner ladite unité de chargement (18) autour d'un axe de rotation (45) ; lesdits moyens de rotation faisant tourner ladite unité de chargement (18) entre une première position de chargement, dans laquelle ladite ouverture allongée (30) est positionnée avec ses côtés principaux parallèles à ladite première direction (D), et une seconde position de déchargement, dans laquelle ladite ouverture allongée (30) est positionnée avec ses côtés principaux transversaux - en particulier, parallèles - à ladite première direction (D).

2. Dispositif selon la revendication 1, dans lequel lesdits moyens de rotation (43) :
- placent ladite unité de chargement (18) dans ladite première position de chargement dans ladite zone de chargement (10) ;
- placent ladite unité de chargement (18) dans ladite seconde position de déchargement dans ladite zone de déchargement (12) pour décharger lesdits articles sensiblement plats par la force de pesanteur ; et
- ramènent ladite unité de chargement (18) dans ladite première position de chargement une fois que lesdits articles sensiblement plats (3) sont déchargés.

3. Dispositif selon l'une quelconque des revendications précédentes, dans lequel ledit dispositif d'approvisionnement en FLAT (50) comprend au moins une paire de rouleaux entraînés (53, 54) positionnés avec leurs axes parallèles à la première direction (D), et qui viennent en prise par frottement avec des surfaces plates opposées (3a, 3b) d'un article sensiblement plat (3) ;
lesdits rouleaux (53, 54) étant mis en rotation par des moyens d'entraînement dans des directions opposées pour accélérer l'article sensiblement plat (3) retenu entre les rouleaux, et pour le projeter dans ladite seconde direction (F) vers l'ouverture allongée de ladite unité de chargement (18).

4. Dispositif selon la revendication 3, dans lequel plusieurs unités de chargement (18) sont reliées pour former une unité de transport (5) se déplaçant le long dudit chemin (7) ;
la position de ladite paire de rouleaux entraînés (53, 54) par rapport aux différentes unités de chargement (18) étant réglable.

5. Dispositif selon la revendication 4, dans lequel la position de ladite paire de rouleaux entraînés (53, 54) est fixe, et la position de ladite unité de transport (5) peut être réglée pour positionner une unité de chargement sélectionnée (18) en face de ladite paire de rouleaux entraînés (53, 54), et pour transférer ledit article sensiblement plat (3) vers ladite unité de chargement.

6. Dispositif selon la revendication 4, dans lequel la position de ladite unité de transport (5) est fixe, et la position de ladite paire de rouleaux entraînés (53, 54) peut être réglée pour positionner ladite paire de rouleaux entraînés (53, 54) en face d'une unité de chargement sélectionnée (18), et pour transférer ledit article sensiblement plat (3) vers ladite unité de chargement.

7. Dispositif selon la revendication 4, dans lequel plusieurs paires de rouleaux entraînés sont agencées, chaque paire étant positionnée en face d'une unité de chargement respective (18) pour transférer ledit article sensiblement plat (3) vers l'unité de chargement.

8. Dispositif selon l'une quelconque des revendications précédentes, dans lequel ledit chemin est un chemin sans fin (7) s'étendant dans un espace tridimensionnel.

9. Dispositif selon la revendication 8, dans lequel au moins une unité de transport (5) est agencée, comprenant plusieurs unités de chargement (18) voisines les unes aux autres dans une direction ;
ledit chemin comprenant une partie inclinée (7c) s'étendant entre un point de départ (7-i) situé à une première hauteur (h1) par rapport à un plan de référence (P), et un point d'arrivée (7-ii) situé à une deuxième hauteur (h2) inférieure à la première hauteur (h1) ;
ledit dispositif (1) comprenant également plusieurs dispositifs d'approvisionnement en FLAT (50) espacés le long de ladite partie inclinée (7c) et sensiblement à une troisième hauteur (h3) par rapport au plan de référence (P) ;
lorsque l'unité de transport (5) se déplace le long de la partie inclinée (7c), différentes unités de chargement (18) sont positionnées à la troisième hauteur (h3), de sorte que chaque unité de chargement (18) est positionnée en face d'un dispositif d'approvisionnement en FLAT respectif (50) pour recevoir à partir de celui-ci un article sensiblement plat (3).

10. Dispositif selon la revendication 9, dans lequel ladite partie inclinée (7c) se termine sur une première partie ascendante (7a-I) qui se termine sur une première zone de déchargement (12-I) où des premières unités de chargement (18) sont sélectivement ouvertes pour transférer les articles sensiblement plats libérés vers un premier système de transport ; ladite première partie ascendante (7a-I) se poursuivant, en aval de ladite première zone de déchargement (12-I) dans une seconde partie ascendante (7a-II) qui se termine sur une seconde zone de déchargement (12-II) où des secondes unités de déchargement (18) sont sélectivement ouvertes pour transférer les articles sensiblement plats libérés vers un second système de transport ;
ladite seconde partie ascendante (7a-II) se terminant, en aval de la seconde zone de déchargement, sur une partie descendante (7d) menant de nouveau à ladite partie inclinée (7c).

11. Dispositif selon la revendication 9 ou 10, dans lequel ladite partie inclinée (7c) s'incline vers le bas en gradins, et comprend plusieurs parties horizontales (7c-h) situées à différentes hauteurs et reliées par des parties inclinées (7c-s).

12. Dispositif selon l'une quelconque des revendications précédentes, et comprenant :
des premiers moyens capteurs (60) pour détecter l'approche de ladite unité de chargement (18) dudit dispositif d'approvisionnement en FLAT (50) ; et
des seconds moyens capteurs (61) pour détecter la position de l'article sensiblement plat (3) transféré vers ledit dispositif d'approvisionnement en FLAT (50) ;
ledit dispositif déterminant également la position de l'article sensiblement plat incident (3) par rapport à l'unité de chargement (18) incidente.

13. Dispositif selon la revendication 1, dans lequel ladite ouverture allongée (30) est rectangulaire.

14. Dispositif selon la revendication 1, dans lequel ladite unité de chargement (18) comprend au moins une première et une seconde paroi (20, 21) espacées l'une de l'autre et définissant des côtés opposés de ladite cavité intérieure (26) ; au moins une partie de chacun des bords droits opposés respectifs (20b₂, 21b₂) de ladite première et de ladite seconde paroi définissant les côtés principaux de ladite ouverture allongée (30).

15. Dispositif selon l'une quelconque des revendications précédentes, dans lequel ladite unité de chargement (18) comprend au moins une ouverture de déchargement (33) munie d'un couvercle (35) qui est mobile entre une position fermée fermant l'ouverture de déchargement (33), et une position ouverte dans laquelle l'ouverture de déchargement (33) est au moins partiellement accessible ; ledit couvercle (35) étant placé, dans ladite zone de déchargement (12), dans ladite position ouverte pour permettre audit article sensiblement plat (3) d'être déchargé à partir de ladite cavité intérieure (26) à travers ladite ouverture de déchargement (33).

16. Dispositif selon l'une quelconque des revendications précédentes, dans lequel plusieurs unités de chargement (18) sont reliées pour former une unité de transport (5) se déplaçant le long dudit chemin (7).

17. Dispositif selon la revendication 16, dans lequel lesdites ouvertures allongées (30) desdites unités de chargement (18) s'étendent sur le même côté de ladite unité de transport (5).

18. Procédé de chargement, de transport et de tri d'articles sensiblement plats (FLAT), en particulier d'articles de courrier (3), comprenant les étapes de :
- transférer un article sensiblement plat (3) vers une unité de chargement (18) sur une zone de chargement (10) ;
- déplacer ladite unité de chargement jusqu'à une zone de déchargement (12) ; et
- libérer sélectivement l'article sensiblement plat de ladite unité de chargement ;
- ladite unité de chargement (18) définissant une cavité intérieure (26) pour recevoir ledit article sensiblement plat (3) et qui communique avec l'extérieur de l'unité de chargement (18) par au moins une ouverture allongée (30) ;
ladite étape de transfert comprenant les étapes de :
- positionner ladite ouverture allongée avec ses côtés principaux sensiblement alignés avec une première direction de déplacement (D) de l'unité de chargement (18) ; et
- transférer un dit article sensiblement plat (3) dans une seconde direction (F) transversale - en particulier, perpendiculaire - à la première direction (D), de sorte que l'article sensiblement plat (3) est transféré dans ladite cavité intérieure (26) à travers ladite ouverture allongée, des bords avant (LE) dudit article sensiblement plat (3) étant sensiblement parallèles auxdits côtés principaux de ladite ouverture allongée (30),
le procédé étant **caractérisé par** les étapes de :
faire tourner ladite unité de chargement (18) autour d'un axe de rotation (45) et entre une première position de chargement dans laquelle ladite ouverture allongée (30) est située avec ses côtés principaux parallèles à ladite première direction de déplacement (D), et une deuxième position de déchargement, dans laquelle ladite ouverture allongée (30) est située avec ses côtés principaux transversaux, en particulier perpendiculaires, à ladite première direction.
